# FASCICULE DE BREVET EUROPEEN

(11) **EP 4 554 880 B1**
(45) Date de publication et mention de la délivrance du brevet: **10.12.2025**
(21) Numéro de dépôt: 23739192.5
(22) Date de dépôt: 04.07.2023
(51) Int. Cl.: B65G 35/06, B65G 47/38, B65G 47/52, B65G 43/00

(54) **TRIEUR HAUT DÉBIT COMPACT À CHARGEMENT SUR DEUX VOIES PARALLÈLES**
KOMPAKTER SORTIERER MIT HOHEM DURCHSATZ UND BELADUNG AUF ZWEI PARALLELEN SPUREN
COMPACT HIGH-THROUGHPUT SORTER WITH LOADING ON TWO PARALLEL LANES

(30) Priorité: 12.07.2022 FR 2207155
(43) Date de publication de la demande: 21.05.2025
(73) Titulaire: Solystic, 92220 Bagneux (FR)
(72) Inventeur: BEAUGRAND, Wilfrid, 26000 VALENCE (FR); HOURS, Patrick, 07130 SAINT-PERAY (FR)
(74) Mandataire: IP Trust
(86) Numéro de dépôt international: PCT/EP2023/068419
(87) Numéro de publication internationale: WO 2024/012940

(56) Documents cités:
- EP-A1- 1 163 053
- WO-A1-2005/066048
- DE-U1- 9 320 415
- US-A1- 2016 214 799
- US-A1- 2021 094 074

## Description

### Domaine technique

L'invention se place dans le domaine de la logistique et plus particulièrement dans le domaine du tri de colis automatisé à débit élevé.

### Technique antérieure

La plupart des installations de tri de colis utilisent aujourd'hui des convoyeurs de tri en boucle équipés de sorties de tri pour trier les colis.

Ce type de convoyeur de tri comprend généralement des réceptacles pour colis aptes non seulement à convoyer les colis selon une certaine direction de convoyage mais également à les trier dans les sorties de tri selon un certain plan de tri prédéterminé.

Certaines installations de tri, telles que celle décrite dans le document EP2921431 et

EP1163053, qui divulgue les caractéristiques de la partie caractérisante de la revendication 1, utilisent des convoyeurs de tri à rails de guidage qui s'étendent dans la direction de convoyage et sur lesquels se déplacent des chariots aptes à déplacer les réceptacles pour colis selon la direction de convoyage.

L'utilisation de deux rails de guidage tubulaires permet notamment de diminuer le rayon de courbure du convoyeur de tri dans les virages, par rapport à des convoyeurs de tri à rails multiples plats, ce qui permet de réduire l'emprise au sol du convoyeur de tri.

Par ailleurs, l'utilisation de ce type de convoyeur de tri dont les réceptacles sont reliés entre eux en une chaîne continue impose une vitesse de convoyage constante pour l'ensemble des réceptacles se déplaçant dans la direction de convoyage. Cette vitesse doit donc être adaptée à la fois pour permettre l'évacuation des colis depuis les réceptacles dans les sorties de tri et pour permettre l'insertion des colis sur les réceptacles.

La vitesse de convoyage est donc limitée à la vitesse de convoyage applicable au niveau des dispositifs d'insertion de colis qui ne peuvent supporter des vitesses de convoyage aussi élevées qu'au niveau des zones d'évacuation de colis.

Cette vitesse de convoyage limitée impacte directement le rendement du tri des colis.

Ainsi, pour conserver un rendement de tri suffisant, une solution consiste à doubler, voire tripler, les zones d'insertion en les répartissant en aval des zones de sortie de tri. Mais cette solution est coûteuse, augmente l'emprise au sol et est contraignante pour le client en termes de gestion des flux et d'implantation dans le bâtiment..

### Exposé de l'invention

L'objectif de l'invention est donc de résoudre les problèmes précités en proposant une installation de tri à la fois compacte et efficace en termes de tri.

A cet effet, l'invention porte sur une
installation de tri de colis comprenant un convoyeur de tri en boucle et des sorties de tri réparties le long du convoyeur de tri, ledit convoyeur de tri comprenant des réceptacles pour colis conçus pour convoyer des colis selon une certaine direction de convoyage et les trier dans les sorties de tri selon un plan de tri prédéterminé, le convoyeur de tri comprenant deux rails parallèles qui s'étendent dans la direction de convoyage et des chariots montés sur les rails conçus pour déplacer les réceptacles pour colis selon ladite certaine direction de convoyage, le convoyeur de tri comprenant un convoyeur principal qui se scinde en deux convoyeurs secondaires sur une certaine portion de convoyage, ledit convoyeur de tri comprenant un système d'aiguillage conçu pour aiguiller les chariots alternativement vers l'un ou l'autre des convoyeurs secondaires, caractérisée en ce que chaque chariot comprend un élément de couplage conçu pour être emmanché sur un rail du convoyeur principal qui sert de rail directeur pour guider le chariot dans la direction de convoyage et un élément de stabilisation agencé pour venir en appui sur l'autre rail du convoyeur principal qui sert de rail suiveur pour supporter verticalement le chariot dans son déplacement selon la direction de convoyage, et en ce que le rail directeur pour chacun des convoyeurs secondaires s'étend dans le prolongement du rail directeur du convoyeur principal de sorte que le déplacement d'un chariot vers l'un ou l'autre des convoyeurs secondaires dépend du rail directeur du convoyeur principal sur lequel le montant du chariot est emmanché.

L'idée à la base de l'invention est d'utiliser un aiguillage passif qui a l'avantage par rapport à l'aiguillage actif de ne pas déplacer de portions de rails dont la masse est très importante et dont le déplacement devrait être effectué très rapidement compte tenu de la vitesse des trains et de leur proximité.

L'installation de tri selon l'invention peut également présenter les caractéristiques suivantes :
- les rails suiveurs des convoyeurs secondaires se croisent pour former un cœur d'aiguillage de sorte à permettre le déplacement de l'élément de stabilisation d'un chariot sur le rail suiveur de l'un ou l'autre des convoyeurs secondaires en fonction du rail directeur sur lequel le chariot est emmanché et en ce que le cœur d'aiguillage se présente sous la forme d'une plateforme sensiblement plate qui est intercalée à la croisée des rails suiveurs des convoyeurs secondaires, lesdits rails suiveurs des convoyeurs secondaires et la plateforme présentant une surface d'appui continue pour l'élément de stabilisation dans la direction de convoyage ;
- le convoyeur de tri comprend deux rails de transition, disposés en amont et en aval des convoyeurs secondaires, qui font chacun la jonction entre un rail du convoyeur principal et un rail suiveur d'un des convoyeurs secondaires, chaque rail de transition étant conçu pour supporter l'élément de stabilisation d'un chariot lors du déplacement dudit élément de stabilisation dans la direction de convoyage dès lors que l'élément de stabilisation n'est plus en appui sur le rail suiveur du convoyeur principal et jusqu'à ce que l'élément de stabilisation soit de nouveau en appui sur le rail suiveur du convoyeur secondaire ;
- chaque élément de stabilisation comprend deux éléments de contact espacés l'un de l'autre dans la direction de convoyage aptes à venir en appui sur au moins un rail suiveur de sorte que l'élément de stabilisation d'un chariot comprend toujours un élément de contact en appui sur au moins un rail suiveur du convoyeur principal et/ou un des convoyeurs secondaires lors de son déplacement du convoyeur principal vers un convoyeur secondaire ;
- ladite installation de tri comprend des dispositifs d'insertion de colis conçu pour insérer les colis sur les réceptacles pour colis en convoyage sur les deux convoyeurs secondaires ;
- l'élément de couplage et l'élément de stabilisation comprennent des moyens de frottement de roulement conçus pour rouler sur les rails ;
- les rails du convoyeur de tri sont des rails tubulaires ;
- plusieurs réceptacles pour colis sont reliés entre eux par des chariots pour former un train de réceptacles pour colis, en ce que le convoyeur de tri comprend une pluralité de trains de réceptacles pour colis qui se suivent dans la direction de convoyage, les chariots d'un même train étant emmanchés sur le même rail ;
- l'installation de tri comprend une unité centrale paramétrée pour contrôler la vitesse de déplacement des chariots de sorte que chaque réceptacle pour colis se déplacent à une vitesse V1 sur le convoyeur principal et à une vitesse V2 sur les convoyeurs secondaires, la vitesse V2 étant égale à la moitié de la vitesse V1 ;
- l'unité centrale est paramétrée pour contrôler la vitesse de déplacement des chariots de sorte que chaque réceptacle pour colis accélère de la vitesse V1 jusqu'à une vitesse Vmax puis ralenti de la vitesse Vmax à la vitesse V2, de sorte à créer un espace suffisant entre deux réceptacles successifs dans la direction de convoyage emmanchés sur des rails directeurs différents et à permettre leur croisement sur les convoyeurs secondaires.

L'idée consiste ici à convoyer les colis à vitesse réduite sur les convoyeurs secondaires afin de fiabiliser l'insertion des colis sur les réceptacles et de convoyer les colis sur le convoyeur principal à vitesse élevée pour garantir un rendement de tri suffisant.

L'invention consiste dans ce but à utiliser un système d'aiguillage permettant de répartir les chariots sur chacun des deux convoyeurs secondaires afin d'appliquer une vitesse deux fois moindre que sur le convoyeur principal.

Les réceptacles étant chargés en parallèle sur les deux convoyeurs secondaires, le débit global est la somme des débits des deux convoyeurs.

### Brève description des dessins

La présente invention sera mieux comprise et d'autres avantages apparaîtront à la lecture de la description détaillée du mode de réalisation pris à titre d'exemple nullement limitatif et illustré par les dessins annexés, dans lesquels :
[Fig.1] - La [Fig.1] est une représentation schématique d'une installation de tri selon l'invention ;
[Fig.2] - la [Fig.2] est une représentation schématique d'un système d'aiguillage selon l'invention ,
[Fig.3] - La [Fig.3] est une représentation schématique des convoyeurs secondaires et des chariots en cours de déplacement dans la direction de convoyage selon l'invention ;
[Fig.4] - La [Fig.4] est une représentation schématique d'un train de réceptacles sur le convoyeur de tri selon l'invention ;
[Fig.5] - La [Fig.5] est une représentation schématique d'un cœur d'aiguillage du système d'aiguillage selon l'invention.

### Description détaillée de l'invention

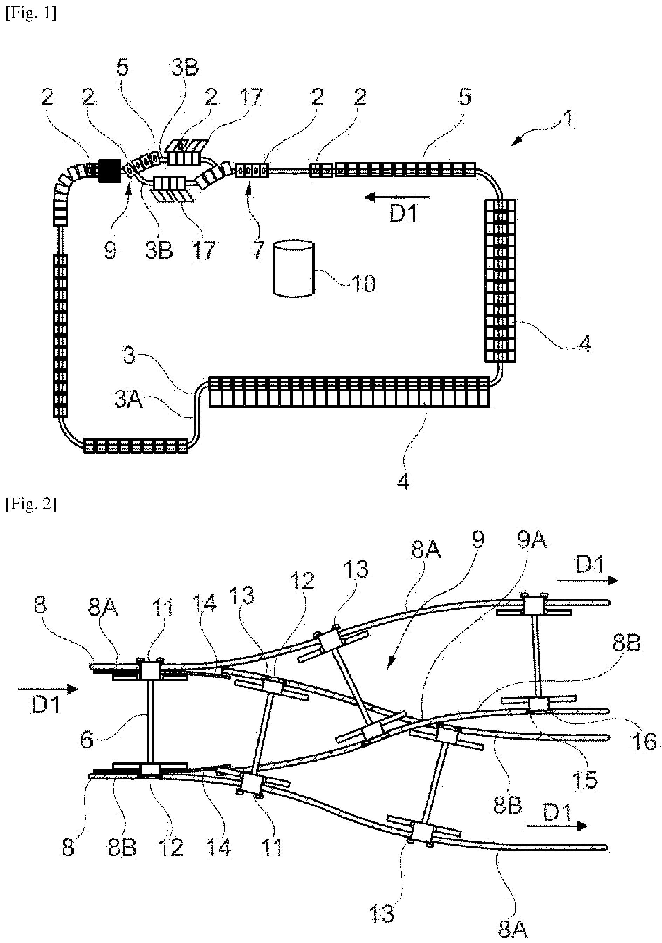

L'installation de tri 1 de colis 2 selon l'invention, également appelée trieur, représentée sur la [Fig.1] est particulièrement bien adaptée pour trier des colis hétérogènes, et notamment des colis de type PPI (petits paquets Import) typiques du e-commerce, à débit élevé tout ayant une emprise au sol réduite.

L'installation de tri 1 de colis 2 selon l'invention comprend notamment un convoyeur de tri 3 en boucle et des sorties de tri 4 réparties le long du convoyeur de tri 3.

Le convoyeur de tri 3 est équipé ici de réceptacles 5 pour colis 2 montés sur des chariots 6 conçus d'une part pour convoyer les colis 2 selon une certaine direction de convoyage D1, mais également pour trier les colis 2 selon un plan de tri prédéterminé dans les sorties de tri 4.

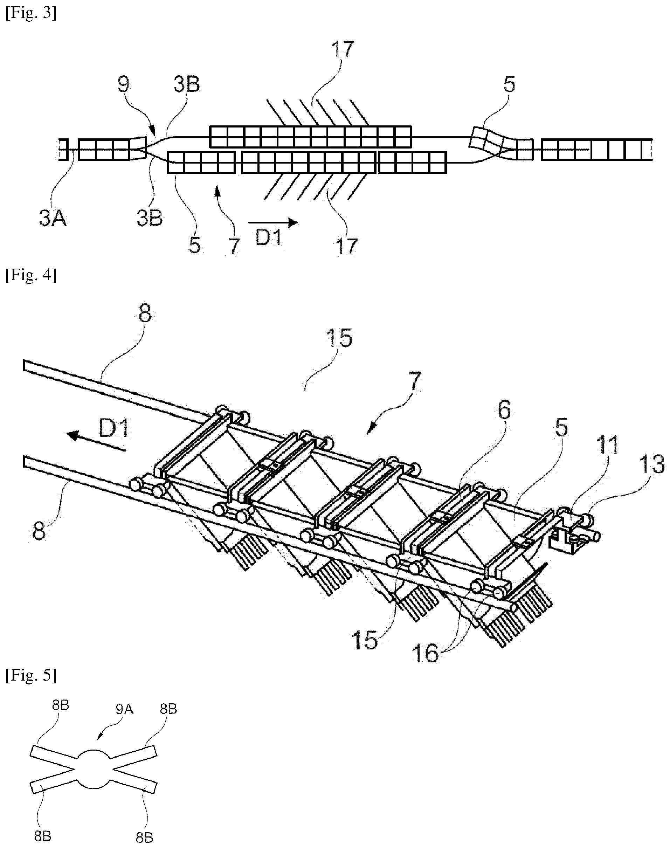

Les réceptacles 5 pour colis 2 se présentent par exemple sous la forme de godets, visibles sur la [Fig.4], munis d'une trappe d'évacuation permettant d'évacuer les colis 2 sous le convoyeur de tri 3 par gravité dans les sorties de tri 4.

Les réceptacles 5 pour colis 2 pourront également se présenter sous la forme de plateaux basculants ou équipés d'une courroie motorisée conçus pour éjecter les colis 2 sur le côté du convoyeur de tri 3 dans les sorties de tri 4.

Sans restreindre la portée de l'invention, les réceptacles 5 pour colis 2 peuvent être reliés entre eux par les chariots 6 pour former une pluralité de trains 7 de réceptacles 5 pour colis 2 qui se suivent dans la direction de convoyage D1, comme représenté sur la [Fig.4].

Chaque train 7 de réceptacles 5 comprendra préférentiellement le même type de réceptacles 5, à godet ou à plateau, afin d'optimiser l'agencement des sorties de tri 3 pour un même train 7 de réceptacles 5.

Il est toutefois possible d'utiliser un nombre différents de réceptacles 5 par train 7, par exemple un train de trois réceptacles suivi d'un train de cinq réceptacles suivi d'un train de quatre réceptacles, etc.

Le convoyeur de tri 3 selon l'invention comprend deux rails 8 parallèles qui s'étendent dans la direction de convoyage D1.

Plus particulièrement, le convoyeur de tri 3 comprend un convoyeur principal 3A qui se scinde en deux convoyeurs secondaires 3B sur une certaine portion de convoyage.

On comprend donc que le convoyeur principal 3A et les convoyeurs secondaires 3B présentent eux aussi chacun deux rails 8 parallèles qui s'étendent dans la direction de convoyage D1.

Le convoyeur de tri 3 est ici équipé d'un système d'aiguillage 9 conçu pour aiguiller les chariots 6 vers l'un ou l'autre des convoyeurs secondaires 3B.

Un système d'aiguillage 9 du même type pourra également être prévu en aval dans la direction de convoyage D1 afin d'aiguiller les chariots 6 vers le convoyeur principal 3A depuis l'un ou l'autre des convoyeurs secondaires 3B.

A titre d'exemples nullement limitatifs, le système d'aiguillage 9 pourra être soit actif avec des lames d'aiguilles mobiles contrôlées par une unité centrale 10 de manière à aiguiller les chariots sur l'un ou l'autre des convoyeurs secondaires, soit passif comme représenté sur la [Fig.2], c'est-à-dire sans que les rails n'aient de partie mobile.

Dans le cas d'un aiguillage passif, chaque chariot 6 selon l'invention comprend un élément de couplage 11 conçu pour être emmanché sur un rail 8 du convoyeur principal 3A qui sert de rail directeur 8A pour guider le chariot 6 dans la direction de convoyage et un élément de stabilisation 12 agencé pour venir en appui sur l'autre rail 8 du convoyeur principal 3A qui sert de rail suiveur 8B pour supporter verticalement le chariot 6 dans son déplacement selon la direction de convoyage D1.

Plus particulièrement, chacun des convoyeurs secondaires 3B comprend un rail 8 qui sert de rail directeur 8A et qui s'étend dans le prolongement du rail directeur 8A du convoyeur principal 3A de sorte que le déplacement d'un chariot 6 vers l'un ou l'autre des convoyeurs secondaires 3B dépend du rail 8A directeur du convoyeur principal 3A sur lequel le montant du chariot 6 est emmanché.

Les rails 8 du convoyeur principal peuvent donc prendre la fonction de rail directeur 8A ou de rail suiveur 8B selon le rail 8 sur lequel est emmanché le chariot 6.

Les rails 8 du convoyeur principal sont donc prolongés chacun par le rail directeur 8A des convoyeurs secondaires sans aucune discontinuité.

Grâce à cet aiguillage passif, le convoyeur de tri 3 peut aiguiller les trains 7 de réceptacles 5 vers l'un ou l'autre des convoyeurs secondaires 3B de manière passive, c'est-à-dire que les trains 7 se déplacent dans la direction de convoyage D1 en empruntant toujours le même convoyeur secondaire 3B.

L'aiguillage passif à l'avantage par rapport à l'aiguillage actif de ne pas déplacer de portions de rails 8 dont la masse est très importante et dont le déplacement devrait être effectué très rapidement compte tenu de la vitesse des trains 7 et de leur proximité.

Aussi, l'utilisation d'aiguillage passif nécessite d'emmancher les trains 7 de réceptacles 5 successifs de manière alternative sur les rails 8 du convoyeur principal 3A de sorte que les convoyeurs secondaires 3B reçoivent un train 7 de réceptacles 5 sur deux.

Aussi, pour faciliter le déplacement des chariots 6 sur les rails 8, l'élément de couplage 11 et l'élément de stabilisation 12 comprennent des moyens de frottement de roulement 13 conçus pour rouler sur les rails.

Les rails 8 du convoyeur de tri 3 tels que représentés sont des rails tubulaires contre lesquels les éléments de couplage 11 et de stabilisation 12 viennent au contact, et notamment les moyens de frottement de roulement 13.

De manière différente mais nullement limitative, Les rails 8 du convoyeur de tri 3 pourraient également se présenter sous la forme de rails en profilé à bord droit.

On comprend ici que les chariots 6 d'un même train 7 doivent être emmanchés sur le même rail 8 pour pouvoir être aiguillés ensemble sur le même convoyeur secondaire 3B.

Le système d'aiguillage 9 selon l'invention est ici agencé de sorte que les rails suiveurs 8B des convoyeurs secondaires 3B se croisent pour former un cœur d'aiguillage 9A.

Le cœur d'aiguillage 9A, représenté sur la [Fig.5], permet ici de déplacer l'élément de stabilisation 11 d'un chariot 6 sur le rail suiveur 8B sur l'un ou l'autre des convoyeurs secondaires 3B en fonction du rail directeur 8A sur lequel le chariot 6 est emmanché.

Le cœur d'aiguillage 9A se présente ici sous la forme d'une plateforme sensiblement plate qui est intercalée à la croisée des rails suiveurs 8B des convoyeurs secondaires 3B.

Plus particulièrement, les rails suiveurs 8B des convoyeurs secondaires 3B et la plateforme présentent une surface d'appui continue pour l'élément de stabilisation 12 dans la direction de convoyage de sorte que les chariots 6 peuvent se déplacer sur un rail suiveur 8B d'un convoyeur secondaire 3B et croiser le rail suiveur 8B de l'autre convoyeur secondaire 3B sans être perturbés dans leur déplacement.

Dans le cas de l'utilisation d'un système d'aiguillage 9 passif, on peut également prévoir deux rails de transition 14 qui font chacun la jonction entre un rail 8 du convoyeur principal 3A et un rail suiveur 8B d'un des convoyeurs secondaires 3B.

Chaque rail de transition 14 est ici conçu pour supporter l'élément de stabilisation 12 d'un chariot 6 lors du déplacement de l'élément de stabilisation 12 dans la direction de convoyage D1 dès lors que l'élément de stabilisation 12 n'est plus en appui sur le rail suiveur 8B du convoyeur principal 3A et jusqu'à ce que l'élément de stabilisation 12 soit de nouveau en appui sur le rail suiveur 8B du convoyeur secondaire 3B.

L'élément de stabilisation 12 comprendra par exemple un galet 15 déporté sur le dessus ou sur le côté du chariot 6 pour venir au contact du rail transitoire 14.

Une alternative à l'utilisation de rail de transition 14 est d'utiliser des éléments de stabilisation 12 comprenant deux éléments de contact 16 espacés l'un de l'autre dans la direction de convoyage aptes à venir en appui sur au moins un rail suiveur 8B de sorte que l'élément de stabilisation 12 d'un chariot 6 comprend toujours un élément de contact 16 en appui sur au moins un rail suiveur 8B du convoyeur principal 3A et/ou un des convoyeurs secondaires 3B lors de son déplacement du convoyeur principal 3A vers un convoyeur secondaire 3B.

Sans restreindre la portée de l'invention, il est tout à fait possible de combiner l'utilisation des rails transitoires 14 avec des éléments de stabilisation 12 à deux éléments de contact 16 espacés.

L'installation de tri selon l'invention comprend également des dispositifs d'insertion 17 de colis 2 conçus pour insérer les colis 2 sur les réceptacles 5 en convoyage sur chacun des convoyeurs secondaires 3B.

A titre d'exemple nullement limitatif, les dispositifs d'insertion 17 sont ici agencés pour venir à fleur du convoyeur de tri 3 de sorte que les colis 2 sont injectés transversalement à la direction de convoyage D1 par simple glissement ou par entraînement par courroies motorisées.

Les réceptacles 5 pour colis 2 peuvent également présenter avantageusement une surface de pose du colis 2 qui s'étend sensiblement à la même hauteur que les rails 8 du convoyeur de tri 3.

Cela permet notamment de limiter le rapprochement entre les colis et les réceptacles en montée, de réduire les contraintes sur les rails 8 et les chariots 6 et de faciliter l'évacuation des colis 2, que ce soit sous le convoyeur de tri 3 ou sur le côté du convoyeur de tri 3.

Grâce à l'installation de tri 1 selon l'invention, il est possible d'optimiser la cadence de tri en convoyant les colis 2 à vitesse élevé sur le convoyeur principal 3A et en circulant sur deux voies en parallèle pour maintenir la cadence globale au niveau des dispositifs d'insertion 17 sur les convoyeurs secondaires 3B où la vitesse est divisée par 2.

Pour cela, l'unité centrale 10 est paramétrée pour contrôler la vitesse de déplacement des trains 7 de réceptacles 5 pour colis 2 de sorte que chaque train 7 de réceptacles 5 se déplace à une vitesse V1 sur le convoyeur principal 3A et à une vitesse V2 sur les convoyeurs secondaires 3B, la vitesse V2 étant égale à la moitié de la vitesse V1.

La vitesse V1 sera par exemple comprise entre 1,5 et 2m/s (mètre par seconde), de préférence 1,8m/s.

Pour une vitesse nominale de 1,8m/s sur le convoyeur principal 3A, on comprend que la vitesse sur les convoyeurs secondaires 3B au niveau des dispositifs d'insertion sera de 0.9m/s.

Plus particulièrement, l'unité centrale 10 est paramétrée pour contrôler la vitesse de déplacement des trains 7 de réceptacles 5 pour colis 2 de sorte que chaque train 7 de réceptacles 5 accélère de la vitesse V1 jusqu'à une vitesse Vmax puis ralenti de la vitesse Vmax à la vitesse V2, de sorte à créer un espace suffisant entre deux trains 7 successifs dans la direction de convoyage D1 emmanchés sur des rails directeurs 8A différents pour permettre leur croisement sur les convoyeurs secondaires 3B.

La vitesse Vmax est calculée en fonction de la longueur des trains 7 de réceptacles et de la longueur du système d'aiguillage 9.

Par longueur du système d'aiguillage 9, on considère un point dans l'espace représentatif de l'endroit où le chariot 6 ou le train 7 de réceptacles 5 quitte le convoyeur principal 3A jusqu'au cœur d'aiguillage 9A.

A titre d'exemple, les vitesses qui sont mises en jeu pour réaliser une cinétique d'accélération et de ralentissement des chariots 6 selon l'invention dans le cas d'un rayon de courbure minimal des déviations de 2 mètres sont les suivantes :

L'accélération se fait à 4m/s² pendant 175ms et s'étend sur 376mm pour atteindre Vmax à 2,5m/s.

Vmax est alors maintenue pendant 1,5s et s'étend sur 3.75m.

Enfin, le freinage à 0.9m/s dure quant à lui 400ms et s'étend sur 680mm.

On comprendra que cette accélération et ce ralentissement successifs permettent aux chariots 6 ou aux trains 7 de réceptacles 5, de se déplacer sur leur rail suiveur 8B en passant par le cœur d'aiguillage 9A sans entrer en collision, comme représenté en [Fig.3].

On comprendra que la longueur de l'ensemble des chariots 6 est inférieure à la longueur du convoyeur de tri 3 de sorte à conserver l'espace nécessaire entre deux chariots 6 ou deux trains 7 au moment du passage sur le cœur d'aiguillage 9A.

Enfin, mise à part l'accélération et le ralentissement des chariots 6 au niveau du système d'aiguillage 9, les vitesses des chariots 6 sur le convoyeur principal 3A et les convoyeurs secondaires 3B sont respectivement constantes.

## Revendications

1. Installation de tri (1) de colis (2) comprenant un convoyeur de tri (3) en boucle et des sorties de tri (4) réparties le long du convoyeur de tri, ledit convoyeur de tri comprenant des réceptacles (5) pour colis conçus pour convoyer des colis selon une certaine direction de convoyage (D1) et les trier dans les sorties de tri selon un plan de tri prédéterminé, le convoyeur de tri comprenant deux rails (8) parallèles qui s'étendent dans la direction de convoyage et des chariots (6) montés sur les rails conçus pour déplacer les réceptacles pour colis selon ladite certaine direction de convoyage, le convoyeur de tri comprenant un convoyeur principal (3A) qui se scinde en deux convoyeurs secondaires (3B) sur une certaine portion de convoyage, ledit convoyeur de tri comprenant un système d'aiguillage (9) conçu pour aiguiller les chariots alternativement vers l'un ou l'autre des convoyeurs secondaires, **caractérisée en ce que** chaque chariot comprend un élément de couplage (11) conçu pour être emmanché sur un rail du convoyeur principal qui sert de rail directeur (8A) pour guider le chariot dans la direction de convoyage et un élément de stabilisation (12) agencé pour venir en appui sur l'autre rail du convoyeur principal qui sert de rail suiveur (8B) pour supporter verticalement le chariot dans son déplacement selon la direction de convoyage, et **en ce que** le rail directeur pour chacun des convoyeurs secondaires s'étend dans le prolongement du rail directeur du convoyeur principal de sorte que le déplacement d'un chariot vers l'un ou l'autre des convoyeurs secondaires dépend du rail directeur du convoyeur principal sur lequel le montant du chariot est emmanché.

2. Installation de tri de colis selon la revendication 1, **caractérisée en ce que** les rails suiveurs des convoyeurs secondaires se croisent pour former un cœur d'aiguillage (9A) de sorte à permettre le déplacement de l'élément de stabilisation d'un chariot sur le rail suiveur de l'un ou l'autre des convoyeurs secondaires en fonction du rail directeur sur lequel le chariot est emmanché et **en ce que** le cœur d'aiguillage se présente sous la forme d'une plateforme sensiblement plate qui est intercalée à la croisée des rails suiveurs des convoyeurs secondaires, lesdits rails suiveurs des convoyeurs secondaires et la plateforme présentant une surface d'appui continue pour l'élément de stabilisation dans la direction de convoyage.

3. Installation de tri de colis selon la revendication 1 ou 2, **caractérisée en ce que** le convoyeur de tri comprend deux rails de transition (14), disposés en amont et en aval des convoyeurs secondaires, qui font chacun la jonction entre un rail du convoyeur principal et un rail suiveur d'un des convoyeurs secondaires, chaque rail de transition étant conçu pour supporter l'élément de stabilisation d'un chariot lors du déplacement dudit élément de stabilisation dans la direction de convoyage dès lors que l'élément de stabilisation n'est plus en appui sur le rail suiveur du convoyeur principal et jusqu'à ce que l'élément de stabilisation soit de nouveau en appui sur le rail suiveur du convoyeur secondaire.

4. Installation de tri de colis selon l'une quelconque des revendications précédentes, **caractérisée en ce que** chaque élément de stabilisation comprend deux éléments de contact (16) espacés l'un de l'autre dans la direction de convoyage aptes à venir en appui sur au moins un rail suiveur de sorte que l'élément de stabilisation d'un chariot comprend toujours un élément de contact en appui sur au moins un rail suiveur du convoyeur principal et/ou un des convoyeurs secondaires lors de son déplacement du convoyeur principal vers un convoyeur secondaire.

5. Installation de tri de colis selon l'une quelconque des revendications précédentes, **caractérisée en ce que** ladite installation de tri comprend des dispositifs d'insertion (17) de colis conçu pour insérer les colis sur les réceptacles pour colis en convoyage sur les deux convoyeurs secondaires

6. Installation de tri de colis selon l'une quelconque des revendications précédentes, **caractérisée en ce que** l'élément de couplage et l'élément de stabilisation comprennent des moyens de frottement de roulement (13) conçus pour rouler sur les rails.

7. Installation de tri de colis selon l'une quelconque des revendications précédentes, **caractérisée en ce que** les rails du convoyeur de tri sont des rails tubulaires.

8. Installation de tri de colis selon l'une quelconque des revendications précédentes, **caractérisée en ce que** plusieurs réceptacles pour colis sont reliés entre eux par des chariots pour former un train (7) de réceptacles pour colis, **en ce que** le convoyeur de tri comprend une pluralité de trains de réceptacles pour colis qui se suivent dans la direction de convoyage, les chariots d'un même train étant emmanchés sur le même rail.

9. Installation de tri de colis selon l'une quelconque des revendications précédentes, **caractérisée en ce que** l'installation de tri comprend une unité centrale (10) paramétrée pour contrôler la vitesse de déplacement des chariots de sorte que chaque réceptacle pour colis se déplacent à une vitesse V1 sur le convoyeur principal et à une vitesse V2 sur les convoyeurs secondaires, la vitesse V2 étant égale à la moitié de la vitesse V1.

10. Installation de tri de colis selon la revendication 9, **caractérisée en ce que** l'unité centrale est paramétrée pour contrôler la vitesse de déplacement des chariots de sorte que chaque réceptacle pour colis accélère de la vitesse V1 jusqu'à une vitesse Vmax puis ralenti de la vitesse Vmax à la vitesse V2, de sorte à créer un espace suffisant entre deux réceptacles successifs dans la direction de convoyage emmanchés sur des rails directeurs différents et à permettre leur croisement sur les convoyeurs secondaires.

## Patentansprüche

1. Sortieranlage (1) für Pakete (2), umfassend einen Sortierförderer (3) in Schleifenausführung und Sortierauslässe (4), die entlang des Sortierförderers verteilt sind, wobei der Sortierförderer Paketbehälter (5) umfasst, die dazu ausgelegt sind, Pakete in eine bestimmte Förderrichtung (D1) zu befördern und sie in den Sortierauslässen gemäß einem vorgegebenen Sortierplan zu sortieren, wobei der Sortierförderer zwei parallele Schienen (8) umfasst, die sich in Förderrichtung erstrecken, und auf den Schienen montierte Schlitten (6), die dazu ausgelegt sind, die Paketbehälter entsprechend der bestimmten Förderrichtung zu bewegen, wobei der Sortierförderer ein Hauptförderband (3A) umfasst, das sich über einen bestimmten Förderabschnitt in zwei Sekundärförderbänder (3B) aufteilt, wobei der Sortierförderer ein Weichensystem (9) umfasst, das dazu ausgelegt ist, die Schlitten abwechselnd auf das eine oder das andere Sekundärförderband zu lenken, **dadurch gekennzeichnet, dass** jeder Schlitten ein Kopplungselement (11) umfasst, das dazu ausgelegt ist, auf einer Schiene des Hauptförderbands eingesetzt zu werden, die als Führungsschiene (8A) dient, um den Schlitten in Förderrichtung zu führen, und ein Stabilisierungselement (12), das dazu angeordnet ist, auf der anderen Schiene des Hauptförderbands zur Anlage zu kommen, die als Folgeschiene (8B) dient, um den Schlitten bei seiner Bewegung entsprechend der Förderrichtung vertikal zu stützen, und **dadurch, dass** die Führungsschiene für jedes der Sekundärförderbänder in der Verlängerung der Führungsschiene des Hauptförderbands verläuft, sodass die Bewegung eines Schlittens zu dem einen oder anderen Sekundärförderband von der Führungsschiene des Hauptförderbands abhängig ist, an der der Schlittenständer eingesetzt ist.

2. Paketsortieranlage nach Anspruch 1, **dadurch gekennzeichnet, dass** die Folgeschienen der Sekundärförderbänder sich kreuzen und ein Weichenherz (9A) bilden, um die Bewegung des Stabilisierungselements eines Schlittens auf der Folgeschiene des einen oder anderen Sekundärförderbands zu ermöglichen, je nachdem, auf welcher Führungsschiene der Schlitten eingesetzt ist, und **dadurch, dass** das Weichenherz die Form einer im Wesentlichen flachen Plattform aufweist, die an der Kreuzungsstelle der Folgeschienen der Sekundärförderbänder zwischengeschaltet ist, wobei die Folgeschienen der Sekundärförderbänder und die Plattform eine in Förderrichtung durchgehende Anlagefläche für das Stabilisierungselement aufweisen.

3. Paketsortieranlage nach Anspruch 1 oder 2,
**dadurch gekennzeichnet, dass** der Sortierförderer zwei vor und hinter den Sekundärförderbändern angeordnete Übergangsschienen (14) umfasst, die jeweils die Verbindung zwischen einer Schiene des Hauptförderbands und einer Folgeschiene eines der Sekundärförderbänder bilden, wobei jede Übergangsschiene dazu ausgelegt ist, das Stabilisierungselement eines Schlittens während der Bewegung des Stabilisierungselements in Förderrichtung zu stützen, sobald das Stabilisierungselement nicht mehr auf der Folgeschiene des Hauptförderbands zur Anlage kommt und bis das Stabilisierungselement erneut auf der Folgeschiene des Sekundärförderbands zur Anlage kommt.

4. Paketsortieranlage nach einem der vorstehenden Ansprüche,
**dadurch gekennzeichnet, dass** jedes Stabilisierungselement zwei in Förderrichtung voneinander beabstandete Kontaktelemente (16) umfasst, die an mindestens einer Folgeschiene zur Anlage kommen können, so dass das Stabilisierungselement eines Schlittens bei seiner Bewegung vom Hauptförderband auf ein Sekundärförderband stets ein Kontaktelement umfasst, das an mindestens einer Folgeschiene des Hauptförderbands und/oder eines der Sekundärförderbänder zur Anlage kommt.

5. Paketsortieranlage nach einem der vorstehenden Ansprüche,
**dadurch gekennzeichnet, dass** die Sortieranlage Paketeinlegevorrichtungen (17) umfasst, die dazu ausgelegt sind, die Pakete bei der Beförderung auf den beiden Sekundärförderbändern in die Paketbehälter einzulegen.

6. Paketsortieranlage nach einem der vorstehenden Ansprüche,
**dadurch gekennzeichnet, dass** das Kopplungselement und das Stabilisierungselement Rollreibungseinrichtungen (13) umfassen, die zum Rollen auf den Schienen ausgelegt sind.

7. Paketsortieranlage nach einem der vorstehenden Ansprüche,
**dadurch gekennzeichnet, dass** es sich bei den Schienen des Sortierförderers um Rohrschienen handelt.

8. Paketsortieranlage nach einem der vorstehenden Ansprüche,
**dadurch gekennzeichnet, dass** mehrere Paketbehälter durch Schlitten miteinander zu einem Zug (7) von Paketbehältern verbunden sind, **dadurch, dass** der Sortierförderer eine Vielzahl von in Förderrichtung aufeinanderfolgenden Zügen von Paketbehältern umfasst, wobei die Schlitten desselben Zuges auf derselben Schiene eingesetzt sind.

9. Paketsortieranlage nach einem der vorstehenden Ansprüche,
**dadurch gekennzeichnet, dass** die Sortieranlage eine Zentraleinheit (10) umfasst, die dazu parametriert ist, die Bewegungsgeschwindigkeit der Schlitten so zu steuern, dass sich jeder Paketbehälter auf dem Hauptförderband mit einer Geschwindigkeit V1 und auf den Sekundärförderbändern mit einer Geschwindigkeit V2 bewegt, wobei die Geschwindigkeit V2 gleich der Hälfte der Geschwindigkeit V1 ist.

10. Paketsortieranlage nach Anspruch 9, **dadurch gekennzeichnet, dass** die Zentraleinheit so parametriert ist, dass sie die Bewegungsgeschwindigkeit der Schlitten so steuert, dass jeder Paketbehälter von der Geschwindigkeit V1 auf eine Geschwindigkeit Vmax beschleunigt, dann von der Geschwindigkeit Vmax auf die Geschwindigkeit V2 verlangsamt, um ausreichend Platz zwischen zwei in Förderrichtung aufeinanderfolgenden Behältern zu schaffen, die auf unterschiedlichen Führungsschienen eingesetzt sind, und um ihnen zu ermöglichen, sich auf den Sekundärförderbändern zu kreuzen.

## Claims

1. Parcel (2) sorting facility (1) comprising a looped sorting conveyor (3) and sorting outlets (4) distributed along the sorting conveyor, the sorting conveyor comprising parcel receptacles (5) designed to convey parcels in a certain conveying direction (D1) and sort them into the sorting outlets according to a predetermined sorting plan, the sorting conveyor comprising two parallel rails (8) extending in the conveying direction and carriages (6) mounted on the rails designed to move the parcel receptacles in the certain conveying direction, the sorting conveyor comprising a main conveyor (3A) which splits into two secondary conveyors (3B) over a certain conveying portion, the sorting conveyor comprising a switching system (9) designed to switch the carriages alternately to either of the secondary conveyors, **characterized in that** each carriage comprises a coupling element (11) designed to be fitted on a rail of the main conveyor which serves as a guide rail (8A) for guiding the carriage in the conveying direction, and a stabilizing element (12) arranged to bear against the other rail of the main conveyor which serves as a follower rail (8B) for vertically supporting the carriage in its movement in the conveying direction, and **in that** the guide rail for each of the secondary conveyors extends from an extension of the guide rail of the main conveyor such that the movement of a carriage toward either of the secondary conveyors depends on the guide rail of the main conveyor on which the carriage upright is fitted.

2. Parcel sorting facility according to claim 1, **characterized in that** the follower rails of the secondary conveyors intersect to form a switch core (9A) so as to allow the stabilizing element of a carriage to be moved on the guide rail of either of the secondary conveyors according to the guide rail on which the carriage is fitted, and **in that** the switch core is in the form of a substantially flat platform which is inserted at the intersection of the guide rails of the secondary conveyors, the guide rails of the secondary conveyors and the platform having a continuous bearing surface for the stabilizing element in the conveying direction.

3. Parcel sorting facility according to claim 1 or 2, **characterized in that** the sorting conveyor comprises two transition rails (14), arranged upstream and downstream of the secondary conveyors, which each form the junction between a rail of the main conveyor and a follower rail of one of the secondary conveyors, each transition rail being designed to support the stabilizing element of a carriage during the movement of the stabilizing element in the conveying direction once the stabilizing element is no longer bearing against the follower rail of the main conveyor and until the stabilizing element is again bearing on the follower rail of the secondary conveyor.

4. Parcel sorting facility according to any of the preceding claims, **characterized in that** each stabilizing element comprises two contact elements (16) spaced apart from one another in the conveying direction and capable of coming to bear against at least one follower rail such that the stabilizing element of a carriage always comprises a contact element bearing against at least one follower rail of the main conveyor and/or one of the secondary conveyors during its movement from the main conveyor to a secondary conveyor.

5. Parcel sorting facility according to any of the preceding claims, **characterized in that** the sorting facility comprises parcel insertion devices (17) designed to insert the parcels onto the parcel receptacles being conveyed on the two secondary conveyors.

6. Parcel sorting facility according to any of the preceding claims, **characterized in that** the coupling element and the stabilizing element comprise rolling friction means (13) designed to roll on the rails.

7. Parcel sorting facility according to any of the preceding claims, **characterized in that** the sorting conveyor rails are tubular rails.

8. Parcel sorting facility according to any of the preceding claims, **characterized in that** a plurality of parcel receptacles are connected to one another by carriages to form a parcel receptacle train (7), **in that** the sorting conveyor comprises a plurality of parcel receptacle trains which follow one another in the conveying direction, the carriages of the same train being fitted on the same rail.

9. Parcel sorting facility according to any of the preceding claims, **characterized in that** the sorting facility comprises a central unit (10) parameterized to control the movement speed of the carriages so that each parcel receptacle moves at a speed V1 on the main conveyor and at a speed V2 on the secondary conveyors, the speed V2 being equal to half the speed V1.

10. Parcel sorting facility according to claim 9, **characterized in that** the central unit is parameterized to control the movement speed of the carriages so that each parcel receptacle accelerates from speed V1 to a speed Vmax and then decelerates from speed Vmax to speed V2, so as to create sufficient space between two successive receptacles in the conveying direction that are fitted on different guide rails and to allow them to intersect on the secondary conveyors.
